# EUROPÄISCHE PATENTANMELDUNG

(11) **EP 0 893 906 A1**
(43) Veröffentlichungstag der Anmeldung: **27.01.1999**
(21) Anmeldenummer: 97112762.6
(22) Anmeldetag: 24.07.1997
(51) Int. Cl.: H04N 1/21, G03B 27/46, G06F 3/12

(54) **Auf digitaler Bildverarbeitung basierendes System zur Herstellung von Bildern**

(71) Anmelder: GRETAG IMAGING AG, CH-8105 Regensdorf (CH)
(72) Erfinder: Murbach, Hans Peter, 8032 Zürich (CH)
(74) Vertreter: Schwabe, Hans-Georg, Dipl.-Ing.

(57) **Zusammenfassung**

Ein auf digitaler Bildverarbeitung basierendes System zur Herstellung von Bildern, insbesondere zur Herstellung von Kopien auf fotografischem Kopiermaterial von Kopiervorlagen, umfasst eine Eingabeeinrichtung (100) zur Erfassung digitaler, die herzustellenden Bilder repräsentierender Bilddaten von einem Eingabemedium, insbesondere einem entwickelten fotografischen Film, sowie von den Bilddaten zugeordneten Begleitdaten, einen Datenspeicher (300) zur Zwischenspeicherung der erfassten und gegebenenfalls aufbereiteten Bilddaten und der Begleitdaten, eine Ausgabeeinrichtung (200) für die Bilddaten auf ein Ausgabemedium, insbesondere ein fotografisches Kopiermaterial, und eine Steuereinrichtung (400), welche die Eingabeeinrichtung, den Datenspeicher und die Ausgabeeinrichtung steuert und verbindet und den Datenfluss zwischen diesen Einrichtungen nach Massgabe der den Bilddaten zugeordneten Begleitdaten verwaltet und kontrolliert.

## Beschreibung

Die Erfindung betrifft ein auf digitaler Bildverarbeitung basierendes System zur Herstellung von Bildern gemäss dem Oberbegriff des unabhängigen Anspruchs Insbesondere betrifft die Erfindung ein System zur Herstellung von Kopien von Kopiervorlagen auf fotografischem Kopiermaterial.

Klassische Systeme zur Herstellung von fotografischen Kopien umfassen typischerweise die folgenden Komponenten:
- eine Vorbereitungsstation, in der belichtete Filme aus den sie enthaltenden Patronen entnommen und ggf zu einem langen Streifen zusammengespleisst werden und in welcher auftragsspezifische Begleitdaten in das System eingegeben werden,
- einen Filmprozessor zur Entwicklung und Trocknung der Filme,
- einen Scanner, welcher die auf den entwickelten Filmen vorhandenen einzelnen Bilder (Kopiervorlagen) fotoelektrisch abtastet,
- ein analog-optisches oder digitales Belichtungsgerät, welches die Bildinformation der Kopiervorlagen auf fotografisches Kopiermaterial, üblicherweise Kopierpapier, aufbelichtet,
- einen Belichtungsrechner, welcher die vom Scanner erfassten Abtastdaten zu Belichtungsdaten verarbeitet und das Belichtungsgerät damit steuert,
- einen Papierprozessor zur Entwicklung und Trocknung des im Belichtungsgerät belichteten fotografischen Kopiermaterials und
- eine Endverarbeitungsstation, welche die entwickelten Filme und die zugehörigen Kopien auftragsweise zusammenführt und ggf. verpackt.

Der Filmprozessor kann zur Verarbeitung von einzelnen Filmen oder zur Verarbeitung von zu einem langen Streifen zusammengespleissten Filmen ausgelegt sein. Der Scanner und der Belichtungsrechner sind normalerweise mit dem Belichtungsgerät zu einer üblicherweise als Printer bezeichneten apparativen Einheit zusammengebaut. Der Printer bzw. das in ihm enthaltene Belichtungsgerät kann zur Verarbeitung von Einzelbildvorlagen, einzelnen Filmen oder gespeissten Filmstreifen sowie von Einzelblättern oder von langen Streifen von Kopiermaterial ausgelegt sein. Das Belichtungsgerät kann die Kopiervorlagen analog-optisch (fotografisch) auf das Kopiermaterial abbilden oder vom Scanner erzeugte Bildinformationsdaten auf das Kopiermaterial bildmässig aufbelichten. Die einzelnen Komponenten der Systeme können ganz oder teilweise alleine stehen oder mit bezüglich des Arbeitsflusses vorangehenden oder nachfolgenden Komponenten gekoppelt sein. Bei alleinstehenden Komponenten erfolgt der Transport von Filmen und Kopiermaterial zwischen den einzelnen Komponenten batch-weise durch geeignete Transportmittel oder manuell. Bei gekoppelten Komponenten werden Filme und Kopiermaterial taktweise direkt jeweils von einer zur nächstfolgenden Komponente weitergereicht, wobei die einzelnen Komponenten in begrenztem Umfang auch durch geeignete Film- bzw. Papier-Puffer geschwindigkeitsmässig entkoppelt sein können.

Bei solchen Systemen, unabhängig davon, ob es sich um sog. Minilabs oder um die in Grosslabors eingesetzten Hochleistungsanlagen handelt, sind die einzelnen Arbeitsäbläufe insofern produktgesteuert, als die Verbindung der einzelnen Komponenten des Systems durch die entwickelten Filme und das belichtete Kopiermaterial gegeben und gesteuert ist. Diese produktgesteuerte Verbindung diktiert die Sequenz und die Geschwindigkeit der einzelnen Arbeitsschritte. Im Interesse einer möglichst hohen Effizienz des Gesamtsystems erfordern diese Systeme eine sorgfältige Vorbereitung und Planung der Auftragsabwicklung, wozu z.B. die Sortierung der Aufträge nach verschiedenen Filmtypen, nach zu verwendendem fotografischem Kopiermaterial u.s.w. gehört. Die Notwendigkeit von Vorbereitung und Planung der Auftragsabwicklung ist insofern nachteilig, als sie die Freiheitsgrade und die Flexibilität der Auftragsabwicklung in der Praxis unangemessen beschränkt.

Durch die vorliegende Erfindung soll nun ein System zur Herstellung von Bildern geschaffen werden, welches diesen Nachteil herkömmlicher Systeme vermeidet und innerhalb der durch die Systemkomponenten gesetzten Grenzen die Abwicklung beliebiger Aufträge ohne vorbereitende Planung ermöglicht.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Einer der wesentlichsten Aspekte der vorliegenden Erfindung besteht darin, dass die die herzustellenden Bilder repräsentierenden Bilddaten zusammen mit ihren zugehörigen Begleitdaten nach Art einer Datenbank in einem Datenspeicher zwischengespeichert werden, wobei eine Steuereinrichtung die gespeicherten Daten verwaltet und den Datenfluss zwischen dem Datenspeicher und der Eingabeeinrichtung und der Ausgabeeinrichtung auftragsorientiert regelt. Auf diese Weise sind die Eingabeeinrichtung und die Ausgabeeinrichtung produktmässig entkoppelt, und die Einspeisung der Bild- und Begleitdaten von der Eingabeeinrichtung in den Datenspeicher kann unabhängig von der Ausgabe der Daten an die Ausgabeeinrichtung erfolgen. Dadurch können die Eingabe- und die Ausgabeeinrichtung mit unterschiedlichen, dem jeweiligen Prozess optimal angepassten Geschwindigkeiten betrieben werden. Ausserdem können Eingabe- und Ausgabeeinrichtung räumlich getrennt angeordnet werden, was die Flexibilität des Systems und der Arbeitsabläufe weiter erhöht.

In einer zweckmässigen Ausführungsform des erfindungsgemässen Systems weist die Eingabeeinrichtung mindestens eine Abtasteinrichtung zur bildmässigen fotoelektrischen Abtastung von körperlichen Kopiervorlagen und zur Erzeugung von die Kopiervorlagen repräsentierenden Bilddaten auf. Ferner weist die Ausgabeeinrichtung mindestens eine digitale Belichtungseinrichtung zur bildmässigen Aufbelichtung der im Datenspeicher zwischengespeicherten Bilddaten auf ein fotografisches Kopiermaterial auf. In dieser Ausführungsform ist das System zur Herstellung von fotografischen Kopien von einer körperlichen Kopiervorlage, typischerweise den einzelnen Bildern eines entwickelten fotografischen Films, geeignet. Durch die Digitalisierung der Kopiervorlagen und die Zwischenspeicherung der Bilddaten im Datenspeicher entfällt die sonst übliche körperliche Zwischenspeicherung bzw. Pufferung zwischen den entsprechenden Komponenten, was Kosten- und Platzersparnis bedeutet.

In einer weiteren, besonders zweckmässigen Ausführungsform des erfindungsgemässen Systems weist die Eingabeeinrichtung mindestens ein mit der Steuereinrichtung zusammenwirkendes Eingabemodul mit einer Entwicklungsvorrichtung für fotografische Filme sowie einer mit dieser zu einer körperlichen Einheit verbundenen oder in diese integrierten Abtasteinrichtung zur bildmässigen fotoelektrischen in-line-Abtastung der entwickelten Filme und zur Erzeugung von die auf den Filmen enthaltenen Kopiervorlagen repräsentierenden Bilddaten auf Ferner weist die Ausgabeeinrichtung mindestens ein mit der Steuereinrichtung zusammenwirkendes Ausgabemodul mit einer Entwicklungsvorrichtung für fotografisches Kopiermaterial sowie einer mit dieser zu einer körperlichen Einheit verbundenen oder in diese integrierten digitalen Belichtungseinrichtung zur bildmässigen in-line-Aufbelichtung der im Datenspeicher zwischengespeicherten Bilddaten auf das noch unentwickelte fotografische Kopiermaterial auf. In dieser Ausführungsform ist das System zur Herstellung von fotografischen Kopien der einzelnen Bilder fotografischer Filme geeignet. Im Unterschied zu herkömmlichen Systemen fehlt hier jedoch der Printer im Klassischen Sinn, seine Funktionen sind vielmehr auf die einzelnen Eingabe- und Ausgabemodule aufgeteilt und in diese integriert. Durch den gleichzeitigen Einsatz mehrerer Eingabe- und Ausgabemodule, die beispielsweise für unterschiedliche Filmtypen und Kopiermaterialien ausgelegt sein können, ist es möglich, unterschiedlichste Kopieraufträge ohne vorbereitende Planung in beliebiger Reihenfolge abzuwickeln. Ausserdem kann die Steuereinrichtung die Auslastung der einzelnen Module optimieren und somit die Gesamteffizienz des Systems steigern.

Im folgenden wird die Erfindung anhand der Zeichnung näher erläutert. Es zeigen:
- Fig. 1: ein allgemeines Prinzipschema des erfindungsgemässen Systems,
- Fig. 2: ein etwas detaillierteres Prinzipschema eines vorteilhaften Ausführungsbeispiels,
- Fig. 3: eine Prinzipskizze eines Eingabemoduls und
- Fig. 4: eine Prinzipskizze eines Ausgabemoduls.

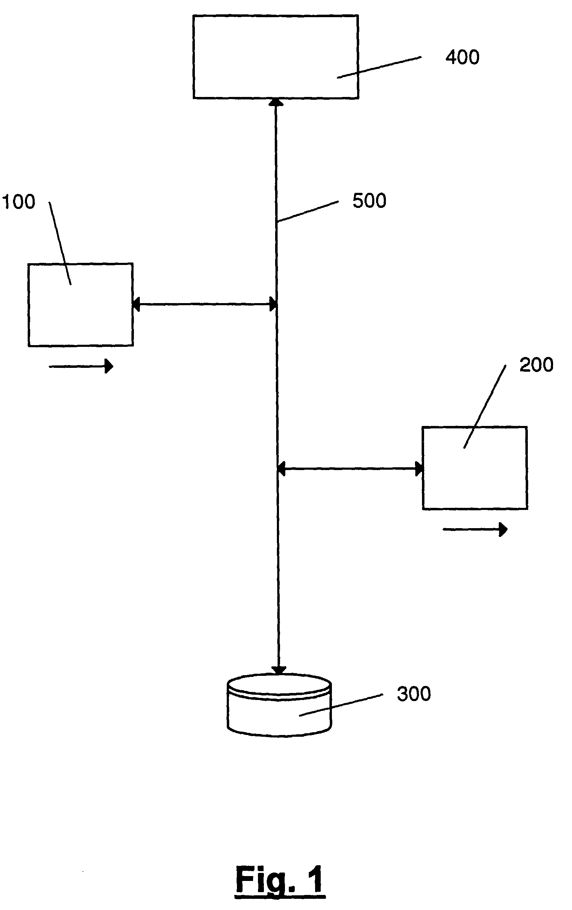

Das in Fig. 1 in seiner allgemeinsten Form dargestellte erfindungsgemässe Bildherstellungssystem umfasst eine Eingabeeinrichtung 100, eine Ausgabeeinrichtung 200, einen Datenspeicher 300, eine Steuereinrichtung 400 und einen Daten- und Steuerbus 500, an den die Einrichtungen 100, 200, 400 und der Datenspeicher 300 angeschlossen sind und welcher diese Einrichtungen und den Datenspeicher untereinander verbindet.

Die Eingabeeinrichtung 100 dient zur Erfassung digitaler, die herzustellenden Bilder repräsentierender Bilddaten von einem Eingabemedium sowie zur Erfassung von den Bilddaten zugeordneten Begleitdaten. Beispielsweise kann die Eingabeeinrichtung 100 als Abtasteinrichtung zur bildmässigen fotoelektrischen Abtastung von körperlichen Kopiervorlagen als Eingabemedium und zur Erzeugung von die Kopiervorlagen repräsentierenden Bilddaten ausgebildet sein und eine Konsole oder Eingabestation für die Eingabe von auftragsspezifischen Begleitdaten aufweisen. Unter Begleitdaten werden hier und im folgenden auftragsspezifische Daten (Auftrags-Nummer, Nummern der zu kopierenden Bildfelder, Anzahlen und Formate der herzustellenden Kopien, Oberflächen-Qualität des fotografischen Kopiermaterials, gewünschtes Ausgabemedium etc.) verstanden.

Der Datenspeicher 300 dient zur Zwischenspeicherung der von der Eingabeeinrichtung 100 erfassten Bilddaten und der zugeordneten Begleitdaten; er kann z.B. nach Art einer Datenbank organisiert sein.

Die Ausgabeeinrichtung 200 gibt die im Datenspeicher 300 zwischengespeicherten Bilddaten auf ein Ausgabemedium aus. Beispielsweise kann die Ausgabeeinrichtung als digitale Belichtungseinrichtung (Laser-Belichtungsgerät, CRT-Belichtungsgerät) zur bildmässigen Aufbelichtung der Bilddaten auf ein fotografisches Kopiermaterial als Ausgabemedium ausgebildet sein.

Die über den Daten- und Steuerbus 500 mit der Eingabeeinrichtung der Ausgabeeinrichtung 200 und dem Datenspeicher 300 verbundene Steuereinrichtung 400 steuert diese Einrichtungen und den Datenspeicher und verwaltet und kontrolliert den Datenfluss zwischen diesen Einrichtungen und dem Datenspeicher auftragsorientiert nach Massgabe der den Bilddaten zugeordneten Begleitdaten. Die Steuereinrichtung 400, der Daten- und Steuerbus 500 und der Datenspeicher 300 sind durch einen digitalen Rechner realisiert, die Eingabeeinrichtung 100 und die Ausgabeeinrichtung 200 bilden periphere Einheiten und sind über geeignete, nicht dargestellte Schnittstellen an den Rechner angeschlossen.

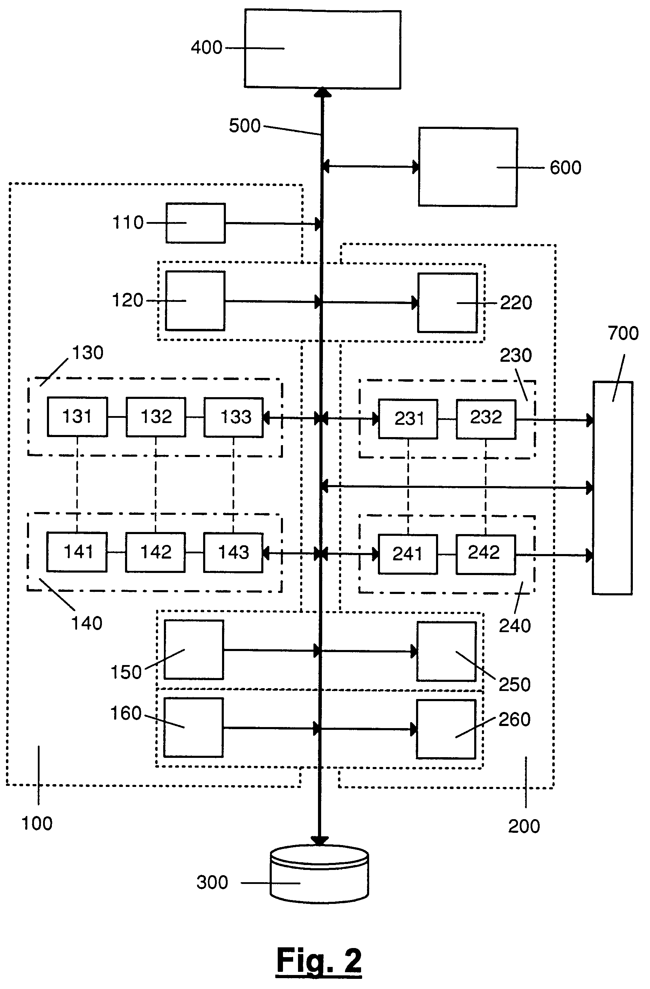

In Fig. 2 ist ein bevorzugtes Ausführungsbeispiel des erfindungsgemässen Bildherstellungssystems detaillierter dargestellt. Man erkennt wiederum die Eingabeeinrichtung 100, die Ausgabeeinrichtung 200, den Datenspeicher 300, die Steuereinrichtung 400 und den Daten- und Steuerbus 500. Zusätzlich sind an den Bus 500 eine digitale Bilddaten-Autbereitungseinrichtung 600 und eine Sammeleinrichtung 700 angeschlossen. Die Aufbereitungseinrichtung 600 und die Sammeleinrichtung 700 arbeiten mit der Steuereinrichtung 400 zusammen und werden von dieser gesteuert.

Die Eingabeeinrichtung 100 umfasst eine Log-In-Station 110, eine Eingangs-Schnittstelle 120 zu einem Datennetzwerk, zwei Eingabemodule 130 und 140, eine Einlesevorrichtung 150 für einen Datenträger in Form einer Diskette und eine Einlesevorrichtung 160 für einen Datenträger in Form einer Daten- oder Photo-CD.

Die Ausgabeeinrichtung 200 umfasst eine Ausgangs-Schnittstelle 220 zu einem Datennetzwerk, zwei Ausgabemodule 230 und 240, eine Aufzeichnungsvorrichtung 250 für einen Datenträger in Form einer Diskette und eine Aufzeichnungsvorrichtung 260 für einen Datenträger in Form einer Daten- oder Photo-CD.

Die Eingangs-Schnittstelle 120 und die Ausgangs-Schnittstelle 220 zu einem Datennetzwerk können selbstverständlich zu einer gemeinsamen bi-direktionalen Schnittstelle zusammengefasst sein. Desgleichen können die Einlesevorrichtungen 150 bzw. 160 mit den jeweiligen Aufzeichnungsvorrichtungen 250 bzw. 260 je zu einer entsprechenden bi-direktionalen Vorrichtung zusammengefasst sein. Die getrennte Darstellung in der Zeichnung dient lediglich der leichteren Verständlichkeit.

Die Eingabemodule 130 und 140 umfassen je eine Vorbereitungsstation 131 bzw. 141 für unentwickelte fotografische Filme, von denen fotografische Bilder herzustellen sind, eine Entwicklungsvorrichtung 132 bzw. 142 für die Filme und eine Abtasteinrichtung 133 bzw. 143 zur bildmässigen fotoelektrischen in-line-Abtastung der entwickelten Filme und zur Erzeugung von die aufden Filmen enthaltenen Kopiervorlagen (einzelnen Bilder) repräsentierenden Bilddaten. Als Abtasteinrichtungen 133 bzw. 143 können beispielsweise die in digitalen fotografischen Printern üblichen Scanner eingesetzt werden.

In der an sich konventionellen Vorbereitungsstation 131 bzw. 141 werden belichtete fotografische Filme aus ihren Patronen entnommen und entweder einzeln oder nach Spleissung in Form eines langen Streifens der nachfolgenden Entwicklungsvorrichtung 132 bzw. 142 zugeführt. Ferner kann die Vorbereitungsstation auch eine Eingabe-Konsole aufweisen, über welche auftragsspezifische Begleitdaten (Auftrags-Nummer, Nummern der zu kopierenden Bildfelder, Anzahlen und Formate der herzustellenden Kopien, gewünschtes Ausgabemedium etc.) in das System eingegeben werden können. Alternativ oder, falls die Vorbereitungsstation keine Eingabe-Konsole können die Begleitdaten auch über die Log-In-Station 110 in das System eingegeben werden. Die fertig entwickelten Filme werden, nachdem sie von der Abtasteinrichtung 133 bzw. 143 bildmässig fotoelektrisch abgetastet worden sind, in an sich bekannter Weise entweder einzeln oder zu einer Rolle aufgewickelt für die weitere Verarbeitung (Zusammenführung mit den von ihnen hergestellten Kopien) bereitgestellt.

Die Abtasteinrichtungen 133 und 143 erzeugen von jedem abgetasteten Bild einen Satz roher Bilddaten (typisch pro abgetastetem Bildpunkt entweder die Farbkoordinaten eines Farbsystems oder eine mehr oder weniger grosse Anzahl von spektralen Dichtewerten). Diese rohen Bilddaten werden der Bilddaten-Aufbereitungseinrichtung 600 zugeführt und von dieser im Hinblick auf die Ausgabe an digitale Belichtungseinrichtungen 231 und 241 umgerechnet, wobei gleichzeitig eventuell erforderliche Belichtungskorrekturen erkannt und mitberücksichtigt werden. Die so umgerechneten Daten werden dann zusammen mit den zugeordneten Begleitdaten als Bilddaten im Datenspeicher 300 zwischengespeichert. Die Umrechnung erfolgt in an sich bekannter Weise nach Massgabe eines geeigneten Color Management Systems, z.B. desjenigen von Eastman Kodak oder von Linotype-Hell. Die Bilddaten-Aufbereitungseinrichtung 600 ist ein an sich bekannter Bildprozessor, wie er z.B. auch in herkömmlichen digitalen Printern eingesetzt wird, und bedarf deshalb keiner weiteren Erläuterung.

Die Ausgabemodule 230 und 240 umfassen je eine digitale Belichtungseinrichtung 231 bzw. 241 zur bildmässigen in-line-Aufbelichtung der im Datenspeicher 300 zwischengespeicherten Bilddaten auf ein fotografisches Kopiermaterial und eine Entwicklungsvorrichtung 232 bzw. 242 für das belichtete fotografische Kopiermaterial. Als digitale Belichtungseinrichtungen 231 bzw. 241 können beispielsweise die in digitalen fotografischen Printern üblichen digitalen Laser- oder CRT-Belichtungseinrichtungen eingesetzt werden. Die Entwicklungsvorrichtung 232 bzw. 242 kann in an sich bekannter Weise für die Verarbeitung von Blattmaterial oder von Streifenmaterial ausgelegt sein.

Von der Entwicklungsvorrichtung 232 bzw. 242 gelangt das fertig entwickelte fotografische Kopiermaterial zur Sammeleinrichtung 700, wo es in an sich bekannter Weise, üblicherweise nach einer Schneide-Operation, auftragsweise geordnet und ggf mit den zugehörigen Eingabemedien, typischerweise den entsprechenden Filmen und Auftragstaschen etc., zusammengeführt und verpackt wird. Die Ordnung (Sortierung) der fertigen Kopien und ihre Zusammenführung mit dem zugeordneten Eingabemedium erfolgt dabei nach Massgabe der den Bilddaten zugeordneten, im Datenspeicher 300 zwischengespeicherten Begleitdaten gesteuert durch die Steuereinrichtung 400.

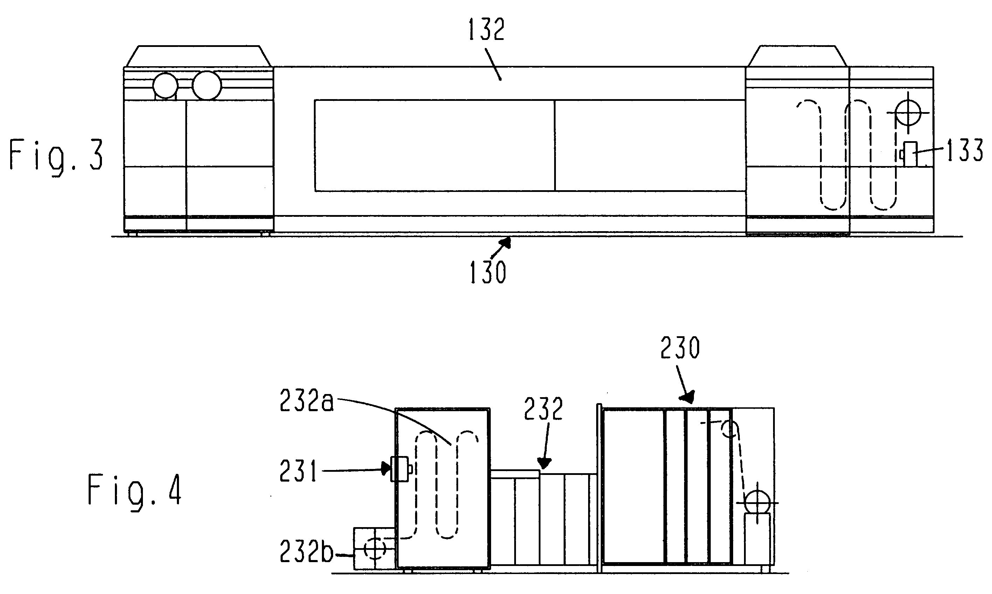

Eine besonders zweckmässige und vorteilhafte Ausgestaltung der Eingabemodule und der Ausgabemodule ist in den Figuren 3 und 4 dargestellt.

Wie man erkennt, ist die Abtasteinrichtung 133 mit der Film-Entwicklungsvorrichtung 132 zu einer körperlichen Einheit zusammengefasst bzw. in die Entwicklungsvorrichtung integriert. Die Abtasteinrichtung 133 ist dabei an der Ausgangsseite der Entwicklungsvorrichtung 132 angeordnet, so dass sie die fertig entwickelten und getrockneten Filme in-line abtasten kann. Die Abtasteinrichtung 133 und die Entwicklungsvorrichtung 132 sind, wie schon erwähnt, an sich konventionell aufgebaut und bedürfen keiner weiteren Erläuterung.

Entsprechend ist die digitale Belichtungseinrichtung 231 mit der Papier-Entwicklungsvorrichtung 232 zu einer körperlichen Einheit zusammengefasst bzw. in die Entwicklungsvorrichtung integriert. Die digitale Belichtungseinrichtung 231 ist dabei an der Eingangsseite der Entwicklungsvorrichtung 232 angeordnet, so dass sie das noch unentwickelte Kopiermaterial bildmässig belichten kann. Dem nasschemischen Teil der Entwicklungsvorrichtung ist dazu ein Eingabepuffer 232a vorgeschaltet, in dem die digitale Belichtungseinrichtung angeordnet ist und der das in einer Papierkassette 232b vorrätig gehaltene fotografische Kopiermaterial in den nasschemischen Teil der Entwicklungsvorrichtung führt. Die digitale Belichtungseinrichtung 231 und die Entwicklungsvorrichtung 232 sind ansonsten konventionell aufgebaut und bedürfen keiner weiteren Erläuterung. Anstatt von einer Papierkassette kann das unbelichtete fotografische Kopiermaterial der Entwicklungsvorrichtung auch direkt von einem Dunkelraum zugeführt werden, in dem grössere Rollen des Kopiermaterials vorrätig gehalten sind.

Im dargestellten Ausführungsbeispiel ist die Eingabeeinrichtung mit zwei Eingabemodulen 130 und 140 ausgestattet. Selbstverständlich könnte auch nur ein einziges Eingabemodul vorhanden sein oder es können mehrere Eingabemodule vorgesehen sein. Besonders vorteilhaft ist wenn zwei oder mehrere Eingabemodule vorgesehen sind und wenn diese unterschiedlich ausgebildet sind. Beispielsweise können die verschiedenen Eingabemodule für unterschiedliche Filmtypen (z.B. 135, APS, etc.) ausgelegt sein. Die Eingabemodule können körperlich auch kombiniert sein. Ferner kann für die Abwicklung von Nachbestellaufträgen mindestens ein Eingabemodul auch zur Verarbeitung von entwickelten fotografischen Filmen ausgelegt sein, wobei dann die Filmentwicklungsvorrichtung natürlich nicht erforderlich ist.

In analoger Weise kann die Ausgabeeinrichtung 200 auch nur ein einziges Ausgabemodul aufweisen oder aber mit mehr als zwei Ausgabemodulen versehen sein. Besonders vorteilhaft ist es, wenn zwei oder mehrere Ausgabemodule vorgesehen sind und wenn diese unterschiedlich ausgebildet sind. Beispielsweise können die verschiedenen Ausgabemodule für unterschiedliches Kopiermaterial (verschiedene Breiten, verschiedene Oberflächen-Qualitäten) ausgelegt sein. Die Ausgabemodule können körperlich auch kombiniert und z.B. mit einer gemeinsamen, mehrbahnigen Papierentwicklungsvorrichtung versehen sein.

Die Bilddaten von herzustellenden Bildern und die zugehörigen Begleitdaten können dem System auch aufanderem Wege zugeführt werden. So können diese Daten beispielsweise auf einem digitalen Datenträger in Form einer Diskette oder einer Daten- oder Photo-CD vorhanden sein und mittels der entsprechenden Einlesevorrichtungen 150 bzw. 160 eingelesen und dann im Datenspeicher 300 zwischengespeichert werden. Ferner kann das System über die Eingangs-Schnittstelle 120 mit einem Datennetzwerk verbunden sein, auf welchem die zu verarbeitenden Bilddaten und zugehörigen Begleitdaten zur Verfügung gestellt sind und in das System eingelesen werden können. Die Umrechnung der eingelesenen Bilddaten in der Aufbereitungseinrichtung 600 erfolgt dabei nur dann, wenn die Bilddaten nicht schon in umgerechneter Form vorliegen, wobei die Unterscheidung z.B. anhand der Begleitdaten erfolgen kann.

Umgekehrt kann die Ausgabe der zwischengespeicherten Bilddaten auch auf ein anderes Ausgabemedium als fotografisches Kopiermaterial erfolgen. So können die Bilddaten ggf. zusammen mit den zugehörigen Begleitdaten mittels der Aufzeichnungsvorrichtungen 250 und 260 auf einen digitalen Datenträger in Form einer Diskette bzw. einer Daten- oder Photo-CD aufgezeichnet oder mittels der Ausgangs-Schnittstelle 220 in ein Datennetzwerk eingespeist werden. Die so auf einen Datenträger aufgezeichneten oder in ein Datennetzwerk eingespeisten Bilddaten können, ggf nach externer Bearbeitung, zu einem späteren Zeitpunkt wieder in das Bildherstellungssystem eingelesen und beispielsweise auf ein anderes Ausgabemedium, beispielsweise fotografisches Kopiermaterial, ausgegeben werden.

Die Steuereinrichtung 400 kontrolliert den Datenfluss auftragsorientiert nach Massgabe der den Bilddaten zugeordneten Begleitdaten. Sie nimmt die Bilddaten und die zugeordneten Begleitdaten von den verschiedenen Komponenten der Eingabeeinrichtung 100 entgegen, speichert sie auftragsorientiert im Datenspeicher 300 und leitet sie ebenfalls auftragsorientiert nach Massgabe der den Bilddaten zugeordneten Begleitdaten an die verschiedenen Komponenten der Ausgabeeinrichtung 200 weiter.

Die Sammeleinrichtung 700 ordnet in Zusammenarbeit mit der Steuereinrichtung 400 nach Massgabe der den Bilddaten zugeordneten Begleitdaten jeweils die Eingabemedien den entsprechenden Ausgabemedien zu. Im Falle eines fotografischen Films als Eingabemedium kann dieser den erzeugten zugehörigen Kopien oder der erzeugten Diskette oder CD als Ausgabemedium zugeordnet werden. Im Falle einer Diskette oder einer CD als Eingabemedium werden z.B. die erzeugten Kopien oder eine andere Diskette oder CD als Ausgabemedium zugeordnet, u.s.w.. Im wesentlichen entspricht die Sammeleinrichtung 700 einer konventionellen Sortier- und Verpackungseinrichtung, wie sie bei klassischen Foto-Finishing-Linien üblich sind, und bedarf deshalb keiner weiteren Erläuterung.

Das beschriebene Bildherstellungssystem ist aufgrund seiner Fähigkeit, Bilddaten und Begleitdaten von verschiedensten Eingabemedien entgegenzunehmen und auf verschiedenste Ausgabemedien auszugeben, in seiner Anwendung äusserst flexibel. Durch den Einsatz mehrerer unterschiedlich ausgelegter Eingabe- und Ausgabemodule kann auf eine zeitaufwendige Vorsortierung nach verschiedenen Filmtypen und Kopie-Formaten und -qualitäten verzichtet werden. Durch die räumliche und zeitliche Entkopplung der Bilddaten-Erfassung und Bilddaten-Ausgabe entsteht eine grosse zeitliche und räumliche Flexibilität und können insbesondere die Bilddaten-Erfassung und die Bilddaten-Ausgabe mit unterschiedlichen, dem jeweiligen Prozess optimal angepassten Geschwindigkeiten erfolgen. Durch die Speicherung der Bilder als digitale Bilddaten entfallen kosten- und platzaufwendige mechanische Zwischenspeicher für Film und Kopierpapier. Durch die Integration der Abtasteinrichtung in die Eingabemodule und der digitalen Belichtungseinrichtung in die Ausgabemodule ist ein Printer im klassischen Sinn überflüssig.

Darüber hinaus hat das erfindungsgemässe Bildherstellungssystem noch den Vorteil, dass eine eventuell erforderliche oder gewünschte Bildbearbeitung sehr einfach realisierbar ist. So können beispielsweise von den gespeicherten Bilddaten sog. Index-Prints erzeugt werden, wobei auch die Überlagerung von passenden Bildmasken sehr einfach möglich ist. Ferner können z.B. auch Grusskarten und dergleichen, also Kombinationen des eigentlichen Bildinhalts mit festen oder veränderlichen Vorgabe-Bildinhalten oder Texten, hergestellt werden. Ausschnittsvergrösserungen, ggf auch verdreht, lassen sich ebenfalls durch digitale Bildbearbeitung einfach realisieren. Schliesslich können die Bilder durch entsprechende Bearbeitung der sie repräsentierenden Bilddaten auch bewusst verändert werden ("Image Enhancement"), beispielsweise etwa das an sich bekannte Auskorrigieren von roten Augen bei Abbildungen von menschlichen Gesichtern.

## Patentansprüche

1. Auf digitaler Bildverarbeitung basierendes System zur Herstellung von Bildern, insbesondere zur Herstellung von Kopien auf fotografischem Kopiermaterial von Kopiervorlagen, gekennzeichnet durch eine Eingabeeinrichtung (100) zur Erfassung digitaler, die herzustellenden Bilder repräsentierender Bilddaten von einem Eingabemedium, insbesondere einem entwickelten fotografischen sowie von den Bilddaten zugeordneten Begleitdaten, einen Datenspeicher (300) zur Zwischenspeicherung der erfassten und gegebenenfalls aufbereiteten Bilddaten und der Begleitdaten eine Ausgabeeinrichtung (200) für die Bilddaten auf ein Ausgabemedium, insbesondere ein fotografisches Kopiermaterial, und eine Steuereinrichtung (400), welche die Eingabeeinrichtung, den Datenspeicher und die Ausgabeeinrichtung steuert und verbindet und den Datenfluss zwischen diesen Einrichtungen nach Massgabe der den Bilddaten zugeordneten Begleitdaten verwaltet und kontrolliert.

2. System nach Anspruch 1, gekennzeichnet durch eine an die Steuereinrichtung (400) angeschlossene und mit dieser zusammenwirkende digitale Aufbereitungseinrichtung (600) für die erfassten Bilddaten.

3. System nach einem der vorangehenden Ansprüche, dadurch gekennzeichnet, dass die Eingabeeinrichtung (100) mindestens eine Eingabestation (110) zur Erfassung der den Bilddaten zugeordneten Begleitdaten aufweist.

4. System nach einem der vorangehenden Ansprüche, dadurch gekennzeichnet, dass die Eingabeeinrichtung (100) mindestens eine Abtasteinrichtung (133; 143) zur bildmässigen fotoelektrischen Abtastung von körperlichen Kopiervorlagen und zur Erzeugung von die Kopiervorlagen repräsentierenden Bilddaten aufweist.

5. System nach einem der vorangehenden Ansprüche, dadurch gekennzeichnet, dass die Eingabeeinrichtung (100) mindestens eine Einlesevorrichtung (150; 160) für auf einem digitalen Datenträger aufgezeichnete Bilddaten und ggf. diesen zugeordneten Begleitdaten aufweist.

6. System nach einem der vorangehenden Ansprüche, dadurch gekennzeichnet, dass die Eingabeeinrichtung (100) mindestens eine Schnittstelle (120) zu einem elektronischen Datennetzwerk zum Einlesen von in diesem Datennetzwerk zur Verfügung gestellten Bilddaten und ggf. diesen zugeordneten Begleitdaten aufweist.

7. System nach einem der vorangehenden Ansprüche, dadurch gekennzeichnet, dass die Ausgabeeinrichtung (200) mindestens eine digitale Belichtungseinrichtung (231; 241) zur bildmässigen Aufbelichtung der im Datenspeicher (300) zwischengespeicherten Bilddaten auf ein fotografisches Kopiermaterial aufweist.

8. System nach einem der vorangehenden Ansprüche, dadurch gekennzeichnet, dass die Ausgabeeinrichtung (200) mindestens eine Aufzeichnungsvorrichtung (250; 260) zur Aufzeichnung der im Datenspeicher (300) zwischengespeicherten Bilddaten und ggf. der diesen zugeordneten Begleitdaten auf einen digitalen Datenträger aufweist.

9. System nach einem der vorangehenden Ansprüche dadurch gekennzeichnet, dass die Ausgabeeinrichtung (200) mindestens eine Schnittstelle (220) zur Einspeisung der im Datenspeicher (300) zwischengespeicherten Bilddaten und ggf. der diesen zugeordneten Begleitdaten in ein elektronisches Datennetzwerk aufweist.

10. System nach einem der vorangehenden Ansprüche, dadurch gekennzeichnet, dass die Eingabeeinrichtung (100) mindestens ein mit der Steuereinrichtung (400) zusammenwirkendes Eingabemodul (130; 140) mit einer Entwicklungsvorrichtung (132; 142) für fotografische Filme sowie einer mit dieser zu einer körperlichen Einheit verbundenen oder in diese integrierten Abtasteinrichtung (133; 143) zur bildmässigen fotoelektrischen in-line-Abtastung der entwickelten Filme und zur Erzeugung von die auf den Filmen enthaltenen Kopiervorlagen repräsentierenden Bilddaten aufweist.

11. System nach Anspruch dadurch gekennzeichnet, dass die Eingabeeinrichtung (100) zwei oder mehrere mit der Steuereinrichtung (400) zusammenwirkende, insbesondere unterschiedliche Filmtypen verarbeitende Eingabemodule (130, 140) aufweist.

12. System nach einem der Ansprüche 10-11, dadurch gekennzeichnet, dass die Eingabeeinrichtung (130) wenigstens ein mit der Steuereinrichtung (400) zusammenwirkendes Eingabemodul für bereits entwickelte fotografische Filme aufweist, welches mit einer Abtasteinrichtung zur bildmässigen fotoelektrischen in-line-Abtastung der entwickelten Filme und zur Erzeugung von die aufden Filmen enthaltenen Kopiervorlagen repräsentierenden Bilddaten versehen ist.

13. System nach einem der vorangehenden Ansprüche, dadurch gekennzeichnet, dass die Ausgabeeinrichtung (200) mindestens ein mit der Steuereinrichtung (400) zusammenwirkendes Ausgabemodul (230; 240) mit einer Entwicklungsvorrichtung (232; 242) für fotografisches Kopiermaterial sowie einer mit dieser zu einer körperlichen Einheit verbundenen oder in diese integrierten digitalen Belichtungseinrichtung (231; 241) zur bildmässigen in-line-Aufbelichtung der im Datenspeicher (300) zwischengespeicherten Bilddaten auf das noch unentwickelte fotografische Kopiermaterial aufweist.

14. System nach Anspruch 13, dadurch gekennzeichnet, dass die Ausgabeeinrichtung (200) zwei oder mehrere mit der Steuereinrichtung (400) zusammenwirkende, insbesondere unterschiedliches Kopiermaterial verarbeitende Ausgabemodule (230, 240) aufweist, und dass die Steuereinrichtung (400) diese Ausgabemodule (230, 240) nach Massgabe ihrer Auslastung bzw. Verfügbarkeit und nach Massgabe der den Bilddaten zugeordneten Begleitdaten selektiv mit den im Datenspeicher (300) zwischengespeicherten Bilddaten beaufschlagt.

15. System nach Anspruch 14, dadurch gekennzeichnet, dass die Ausgabemodule (230, 240) eine gemeinsame mehrbahnige Entwicklungsvorrichtung aufweisen, wobei jeder Bahn der Entwicklungsvorrichtung eine eigene digitale Belichtungseinrichtung zugeordnet ist.

16. System nach einem der vorangehenden Ansprüche, gekennzeichnet durch eine mit der Steuereinrichtung (400) zusammenwirkende und von dieser gesteuerte Sammeleinrichtung (700), welche die von der Ausgabeeinrichtung (200) mit Bilddaten beaufschlagten Ausgabemedien nach Massgabe der den erfassten Bilddaten zugeordneten Begleitdaten ordnet.

17. System nach Anspruch 5, gekennzeichnet durch eine mit der Steuereinrichtung (400) zusammenwirkende und von dieser gesteuerte Sammeleinrichtung welche die von der Ausgabeeinrichtung (200) mit Bilddaten beaufschlagten Ausgabemedien nach Massgabe der den erfassten Bilddaten zugeordneten Begleitdaten ordnet und den zugehörigen, von der Einlesevorrichtung eingelesenen digitalen Datenträgern zuordnet.

18. System nach einem der Ansprüche 10-12, gekennzeichnet durch eine mit der Steuereinrichtung (400) zusammenwirkende und von dieser gesteuerte Sammeleinrichtung (700), welche die von der Ausgabeeinrichtung (200) mit Bilddaten beaufschlagten Ausgabemedien nach Massgabe der den erfassten Bilddaten zugeordneten Begleitdaten ordnet und den zugehörigen, von dem bzw. den Eingabemodulen (130, 140) verarbeiteten fotografischen Filmen zuordnet.

19. System nach einem der Ansprüche 10-12 und einem der Ansprüche 13-15, gekennzeichnet durch eine mit der Steuereinrichtung (400) zusammenwirkende und von dieser gesteuerte Sammeleinrichtung (700), welche die von dem bzw. den Ausgabemodulen (230, 240) erzeugten fotografischen Kopien nach Massgabe der den erfassten Bilddaten zugeordneten Begleitdaten ordnet und den zugehörigen, von dem bzw. den Eingabemodulen (130, 140) verarbeiteten fotografischen Filmen zuordnet.

20. System nach Anspruch 2 und einem der Ansprüche 10-12 und einem der Ansprüche 13-15, dadurch gekennzeichnet, dass die mit der Steuereinrichtung (400) zusammenwirkende digitale Aufbereitungseinrichtung (600) die erfassten Bilddaten für die Weiterverarbeitung in der bzw. den digitalen Belichtungseinrichtungen (231, 241) aufbereitet.
